# NEUE EUROPÄISCHE PATENTSCHRIFT

(11) **EP 3 502 731 B2**
(45) Veröffentlichungstag und Bekanntmachung des Hinweises auf die Entscheidung über den Einspruch: **11.03.2026**
(45) Hinweis auf die Patenterteilung: 02.08.2023
(21) Anmeldenummer: 18214899.9
(22) Anmeldetag: 20.12.2018
(51) Int. Cl.: G01S 7/00, G01S 13/88, G01S 13/34, G08B 7/06, H05B 47/115, G01S 13/82

(54) **VORRICHTUNG ZUM DETEKTIEREN VON PERSONEN UND ZUR KENNZEICHNUNG EINES WEGES IN EINEM GEBÄUDE**
DEVICE FOR DETECTING PERSONS AND FOR MARKING A ROUTE IN A BUILDING
DISPOSITIF DE DÉTECTION DES PERSONNES ET D'IDENTIFICATION D'UN TRAJET DANS UN BÂTIMENT

(30) Priorität: 20.12.2017 DE 102017130796
(43) Veröffentlichungstag der Anmeldung: 26.06.2019
(73) Patentinhaber: INOTEC Sicherheitstechnik GmbH, 59469 Ense (DE)
(72) Erfinder: ZIEMKUS, Andreas, 59755 Arnsberg (DE); DÜMPELMANN, Jan, 59457 Werl (DE)
(74) Vertreter: Graefe, Jörg

(56) Entgegenhaltungen:
- EP-A1- 1 790 994
- EP-A2- 2 922 039
- WO-A1-2012/037680
- CN-A- 105 743 542
- DE-A1- 102014 013 148
- DE-U1- 202015 101 842
- KR-B1- 101 566 622
- US-A1- 2009 270 065
- US-A1- 2017 086 202
- US-B1- 7 916 066

## Beschreibung

Die vorliegende Erfindung betrifft eine Notleuchte mit einer ersten Vorrichtung zum Detektieren von Personen und zur Übertragung von ersten Informationen, zum Beispiel zur Kennzeichnung eines Weges vorzugsweise in einem Gebäude, wobei die erste Vorrichtung einen ersten Sender zum Senden eines ersten Sendesignals und einen ersten Empfänger zum Empfangen eines Echos des ersten Sendesignals und zur Erzeugung eines dem Echo entsprechenden elektrischen Signals aus dem empfangenen Echo aufweist und wobei der erste Empfänger ein Auswertemittel aufweist, um das dem Echo entsprechende elektrische Signal auszuwerten, wobei das Auswertemittel geeignet und eingerichtet ist, eine Information zu erzeugen, die die Detektion von Personen anzeigt. Die Erfindung betrifft insbesondere die Kommunikation der ersten Vorrichtung mit einer zweiten Vorrichtung, um erste Informationen von der ersten Vorrichtung zur zweiten Vorrichtung und womöglich Informationen auch von der zweiten Vorrichtung zur ersten Vorrichtung zu übertragen.

Erste Vorrichtungen zum Detektieren von Personen sind aus dem Stand der Technik bekannt. Bekannt sind insbesondere Infrarotbewegungsmelder, die zur Steuerung von Leuchten, Türen oder Alarmanlagen verwendet werden.

Aus Kraftfahrzeugen sind außerdem Radarsensoren bekannt, um damit Hindernisse aller Art, auch Personen zum Zweck der Unfallverhütung zu detektieren.

Ferner ist es bekannt, Ultraschall zur Detektion von Personen oder Objekten zu benutzen.

Es ist auch bekannt, erste Vorrichtungen zum Detektieren von Personen in Leuchten, auch in Notleuchten einzusetzen, um in Abhängigkeit von der Anwesenheit von Personen zum Zwecke des Energiesparens die Helligkeit der Leuchten einzustellen. So etwas ist in den Dokumenten DE 20 2015 101 842 U1 und DE 10 2014 013 148 A1 offenbart.

In dem Dokument WO 2011/015975 ist darüber hinaus offenbart, dass eine erste Vorrichtung zur Detektion von Personen dazu genutzt werden kann, Rettungsdienste zu Personen zu leiten, die ein zu evakuierendes Gebäude nicht verlassen haben, zum Beispiel weil sie verletzt oder ohne Bewusstsein sind. Um anzuzeigen, dass in einem Raum eine ggf. hilflose Person liegt, kann eine Leuchte in einem Flur über der Zugangstür zu dem Raum eingeschaltet werden.

In Europa werden in Gebäuden Fluchtwege durch Sicherheitsleuchten für Rettungswege mit den bekannten grün-weißen Logos gekennzeichnet. In anderen Regionen werden andere Symbole für die Kennzeichnung von Fluchtwegen benutzt. Darüber hinaus sind optische Sicherheitsleitsysteme bekannt, mit denen Fluchtwege in Abhängigkeit von deren Begehbarkeit gekennzeichnet werden. Aus den Dokumenten DE 10 2014 004 170 A1 und DE 10 2008 017 656 A1 sind Vorrichtungen bekannt, mit denen es möglich ist, einen Fluchtweg zusätzlich zu kennzeichnen, nämlich akustisch (DE 10 2008 017 656 A1) oder durch drahtlose Kommunikation zu einem von einer Person in einem Gebäude mitzuführenden Endgerät.

Aus dem Dokument EP 2 849 541 A2 ist es bekannt Leuchten so zu steuern, dass über das von den Leuchten ausgestrahlte Licht Informationen übertragen werden können. Dazu wird das ausgestrahlte Licht in für einen Menschen nicht sichtbarer Weise moduliert bzw. ein- und ausgeschaltet. Mittels der übertragenen Informationen ist es zum Beispiel möglich, ein Identifikationsmerkmal der Leuchte oder andere Merkmale der Leuchte zu übertragen. Über einen Empfänger, der ebenfalls in dem Dokument EP 2 849 541 A2 beschrieben ist, können das Identifikationsmerkmal oder die anderen Merkmale empfangen werden.

Der Erfindung lag nun die Aufgabe zugrunde, einerseits von einer ersten Vorrichtung eine Kennzeichnung eines Fluchtweges auf eine zweite Vorrichtung, zum Beispiel ein mobiles Endgerät zu übertragen und andererseits in einem Notfall die Anwesenheit von u.U. hilflosen Personen zu erfassen und zu melden. Außerdem sollen womöglich Informationen von der zweiten Vorrichtung zur ersten Vorrichtung übertragen werden. Für die Lösung dieser Aufgaben soll möglichst die in einem Gebäude vorhandene Infrastruktur, insbesondere einer Notbeleuchtung oder einer Sicherheitsbeleuchtung genutzt werden.

Auch bei der Vorrichtung gemäß dem Dokument EP 1 790 994 A1 ist es vorgesehen, mit einem (Radar-)Sendesignal eine Person zu detektieren. Auch ist vorgesehen, eine Information in ein Radarsignal einzubringen, aber nur wenn eine Person detektiert wird. Mit der in das Radarsignal eingebrachten Information soll ein Vorgang an einer entfernten Stelle ausgelöst werden, zum Beispiel ein Schaltvorgang. Diese Information steht mit dem Detektionsergebnis in unmittelbarem Zusammenhang. Diese Information kann daher nur zeitlich nach der Detektion eingebracht werden. Ein Sender der Vorrichtung aus dem Dokument EP 1 790 994 A1 ist somit geeignet und eingerichtet, in das Sendesignal zum Zwecke einer Kommunikation eine erste Information einzubringen. Das Dokument US 2009/270065 A1 offenbart eine Vorrichtung zum Detektieren von Personen. Wurde eine Person detektiert, kann von einer zweiten Vorrichtung ein Signal erzeugt werden, das die Detektion anzeigt und an weitere Vorrichtungen weitergeben kann. Die Dokumente US 7 916 066 B1, US 2017/086202 A1, KR 101 566 622 B1 und CN 105 743 542 A offenbaren weitere Vorrichtungen.

Diese Aufgabe wird erfindungsgemäß durch eine Notleuchte mit einer ersten Vorrichtung nach Anspruch 1 gelöst. Der erste Sender einer erfindungsgemäßen ersten Vorrichtung ist geeignet und eingerichtet, in das erste Sendesignal zum Zwecke einer Kommunikation eine erste Information einzubringen, die zumindest eine Kennzeichnung eines Flucht- oder Rettungsweges umfasst. Die erste Information kann zusätzlich eine Kennzeichnung des ersten Senders umfassen. Die Detektion von Personen, insbesondere von Personen in einem zu evakuierenden Gebäude und die Kennzeichnung von von Flucht- oder Rettungswegen kann mittels der erfindungsgemäßen ersten Vorrichtung gleichermaßen geleistet werden, wie auch eine Übertragung von weiteren ersten Informationen, zum Beispiel solchen, die die Merkmale des ersten Senders betreffen. Das geschieht nach der Erfindung besonders effektiv dadurch, dass die ersten Informationen zur Kennzeichnung des Flucht- oder Rettungsweges in dem ersten Sendesignal enthalten sind, das zur Erzeugung eines Echos gesendet wird, um anhand des Echos Personen zu detektieren. Ausgestaltungen der Erfindung sind u.a. in den weiteren Ansprüchen angegeben. Die von dem ersten Sender übertragenen ersten Informationen, die Merkmale des ersten Senders betreffen, können einer Identifikation des ersten Senders oder der mit dem ersten Sender ausgestatteten Notleuchte dienen. Es kann sich bei diesen ersten Informationen auch um Parameter der Notleuchte handeln.

Die durch das Einbringen von ersten Informationen mögliche Kommunikation zwischen der erfindungsgemäßen ersten Vorrichtung und einer zweiten Vorrichtung, zum Beispiel einem End- oder Empfangsgerät, kann unidirektional von der erfindungsgemäßen Vorrichtung zum Empfangsgerät sein. Es ist aber auch möglich, dass die Kommunikation zwischen der erfindungsgemäßen ersten Vorrichtung und der zweiten Vorrichtung bidirektional ist, um Informationen von der zweiten Vorrichtung zur ersten Vorrichtung zu übertragen.

Zur Kennzeichnung eines bestimmten Weges ist es in einem einfachen Fall lediglich notwendig, einen möglichen Weg zum Beispiel in einem Gebäude als den Weg zu kennzeichnen, der begangen werden soll, zum Beispiel, weil es der kürzeste Weg zu einem sicheren Ort innerhalb oder außerhalb des Gebäudes ist. Andere mögliche Wege in dem Gebäude müssten nicht gekennzeichnet werden. In einem solchen Fall ist dann klar, dass eine Person, die den bestimmten Weg gehen soll, nur der Kennzeichnung folgen muss.

Es ist aber auch möglich, dass andere Wege als der bestimmte Weg als nicht begehbar gekennzeichnet werden. Es ist dann nicht nur der bestimmte Weg zu kennzeichnen. Es ist dann an Abzweigungen von dem bestimmten Weg zu kennzeichnen, dass der bestimmte Weg an den Abzweigungen nicht verlassen werden darf oder soll.

Bei einem optischen Sicherheitsleitsystem werden Fluchtwege mit grünen Rettungszeichenleuchten als begehbar gekennzeichnet. An Abzweigungen werden Wege, die von dem Fluchtweg abzweigen durch ein leuchtendes rotes X als nicht begehbar gekennzeichnet. Entsprechendes ist mit einer erfindungsgemäßen Vorrichtung auch möglich.

Der erste Sender ist ein Radarsender. Gerade das Radar hat sich in vielen technischen Bereichen als zuverlässige Technologie zur Detektion von Personen und Objekten sowie für die Erkennung einer Bewegung von Personen und Objekten erwiesen.

Erfindungsgemäß werden das modulierte Dauerstrichradar (FMCW) verwendet, wobei mit dem FMCW-Radar die Bewegungsgeschwindigkeit, die Bewegungsrichtung und die Entfernung einer Person oder eines Objektes ermittelt werden kann.

Ein Weg könnte in einem einfachen Fall dadurch gekennzeichnet werden, dass nur erste Sender entlang des bestimmten Weges ein erstes Sendesignal senden, während erste Sender entlang gesperrter Wege kein erstes Sendesignal senden. Das erste Sendesignal hat dann im Fall der Kennzeichnung des bestimmten Weges eine Amplitude größer als null. Es ist möglich, dass die ersten Sender entlang gesperrter Wege nur zeitweise senden. Es ist möglich, dass erste Sender entlang des bestimmten Weges und Sender entlang eines gesperrten Weges getaktete Signale senden, wobei der Takt der ersten Sendesignale unterschiedlich ist, woran man dann mittels eines Empfängers den bestimmten Weg und den gesperrten Weg erkennen kann. Das ist sowohl mit Radar- als auch mit Ultraschalltechnik möglich.

Auch die Frequenz des ersten Sendesignals kann zur Kennzeichnung des bestimmten Weges genutzt werden. So können erste Sender entlang des bestimmten Weges ein Radar- oder Ultraschallsignal mit einer anderen Frequenz senden als erste Sender entlang gesperrter Wege.

Beim modulierten Dauerstrichradar wird das erste Sendesignal mit einer sich ändernden Frequenz gesendet. Häufig wird die Frequenz linear verändert. Die lineare Veränderung der Frequenz führt zu sogenannten Rampen, die auch als Chirps bezeichnet werden. Die Rampen können eine positive oder negative Steigung haben. Die positive Rampe könnte zur Kennzeichnung des bestimmten Weges verwendet werden, während eine negative Rampe zur Kennzeichnung eines Weges gewählt werden kann, der nicht begangen werden soll oder darf. Ähnliche modulierte Signale können auch mit Ultraschall erzeugt werden.

Es ist auch möglich, in einem ersten Sendesignal binärcodierte Informationen mittels eines modulierten Dauerstrichradars zu übertragen. Dabei kann zum Beispiel eine Null durch eine steigende Rampe und eine Eins durch eine fallende Rampe dargestellt werden oder umgekehrt. Es ist auch möglich, eine Eins durch eine steigende oder fallende Rampe und eine Null durch eine fehlende Rampe darzustellen oder umgekehrt. Ein CW-Radarsignal kann zum Beispiel durch Amplitudenumtastung moduliert werden, um einen Binärcode in dem Signal zu codieren, mit dem eine Information übertragen werden kann.

Anhand von sich unterscheidenden ersten Sendesignalen der ersten Sender verschiedener erster Vorrichtungen entlang des bestimmten Weges und entlang des gesperrten Weges ist es mit einer zweiten Vorrichtung, zum Beispiel mit einem Empfänger, den eine zu leitende Person mit sich führt, möglich, diese Person zu leiten. Die zweite Vorrichtung setzt dazu das empfangene erste Sendesignal in ein von der Person wahrnehmbares Signal um. Das wahrnehmbare Signal kann ein akustisches, taktiles und/oder optisches Signal sein.

Eine erfindungsgemäße Notleuchte kann zwei oder mehr erfindungsgemäße erste Vorrichtungen haben, um unterschiedliche erste Sendesignale in unterschiedliche Richtungen abstrahlen zu können. Damit ist es möglich, einen Flur, Durchgang, eine Tür, Treppe o.ä. in eine Richtung als bestimmten Weg zu kennzeichnen und ihn in der anderen Richtung zu sperren.

Der erste Sender einer erfindungsgemäßen ersten Vorrichtung kann eine Antenne zum Senden des ersten Sendesignals umfassen. Die Antenne kann eine Richtantenne sein, die das erste Sendesignal nur in vorgegebene Richtungen abstrahlt.

Der erste Sender weist ein erstes Mittel zur Informationsverarbeitung und Signalerzeugung auf, um das erste Sendesignal einschließlich der darin eingebrachten ersten Information zur Kennzeichnung des Weges zu erzeugen. Das Mittel kann eine Steuerung, einen Oszillator und einen Verstärker umfassen. Die Steuerung kann den Oszillator ansteuern, damit das erste Sendesignal erzeugt wird, dass durch den Verstärker verstärkt wird. Das verstärkte Signal kann einer Sendeantenne der ersten Vorrichtung zugeleitet werden, mit der das erste Sendesignal gesendet werden kann.

Das erste Mittel zur Informationsverarbeitung und Signalerzeugung kann einen Modulator umfassen. Mit diesem Modulator kann das von einem Oszillator erzeugte Signal zum Einbringen der ersten Information moduliert werden. Es ist aber auch möglich, dass der Oszillator von der Steuerung so angesteuert wird, dass am Ausgang des Oszillators ein moduliertes Signal vorliegt, welches die erste Information enthält. Insbesondere ein frequenzmoduliertes Dauerstrichsignal kann auf diese Art erzeugt werden.

Das Auswertemittel einer ersten Vorrichtung kann einen Demodulator aufweisen. Der Demodulator der ersten Vorrichtung kann ein Mischer sein, der das von einem Oszillator der ersten Vorrichtung erzeugte Signal, zum Beispiel das erste Sendesignal mit dem vom ersten Empfänger empfangenen Signal, welches das Echo des ersten Sendesignals enthält, mischt. Das dabei erzeugte Zwischenfrequenzsignal kann dann ausgewertet werden. Aus dem Zwischenfrequenzsignal kann beispielsweise eine Information gewonnen werden, die Personen in einem Detektionsbereich anzeigt. Die Erkennung einer Person im Detektionsbereich kann zum Beispiel durch Vergleich des Echos mit einem im Auswertemittel gespeicherten Muster erfolgen. Die Erkennung einer Person kann auch durch die Erkennung von Bewegungen im Detektionsbereich erfolgen. Eine Kombination beider Methoden ist ebenso möglich.

Das Auswertemittel einer ersten erfindungsgemäßen Vorrichtung kann zum Trennen der Informationen im Echo und im dritten Sendesignal eine dem Demodulator nachgeschaltete Frequenzweiche oder Filter aufweisen.

Die erste Vorrichtung einer erfindungsgemäßen Notleuchte weist ein zweites Mittel zur Informationsverarbeitung und Signalerzeugung auf, um ein zweites Sendesignal zu erzeugen, welches die Personen anzeigende Information enthält. Dieses zweite Sendesignal kann dann an eine dritte Vorrichtung gesendet werden, zum Beispiel eine Einrichtung zur Notlichtversorgung, einer Brandmeldeanlage, einer Alarmanlage oder anderes.

Das zweite Mittel zur Informationsverarbeitung und Signalerzeugung kann einen zweiten Modulator aufweisen.

Die erste Vorrichtung weist eine Schnittstelle auf, über welche das zweite Sendesignal aus der ersten Vorrichtung heraus übertragbar ist. Es kann sich um eine Schnittstelle für kabellose oder kabelgebundene Kommunikation handeln. Über die Schnittstelle ist eine zweite Information zur Kennzeichnung eines Weges in die erste Vorrichtung hinein übertragbar. Die Übertragung kann von einer dritten Vorrichtung erfolgen.

Eine erfindungsgemäße erste Vorrichtung kann einen Versorgungsanschluss zur Versorgung der ersten Vorrichtung mit elektrischer Energie aufweisen. Die Schnittstelle kann den Versorgungsanschluss umfassen oder umgekehrt. Eine Information kann so auch über ein Stromnetz zur ersten Vorrichtung übertragen werden, das zur Versorgung der ersten Vorrichtung mit elektrischer Energie genutzt wird. Die erste Vorrichtung kann ein Gerät sein oder ein Gerät umfassen, wie es u.a. in den Ansprüchen 14 bis 22 des Dokumentes DE 10 2014 112 726 A1 beschrieben ist. Das dort beschriebene Gerät weist wenigstens eine Schnittstelle für eine Kommunikation über einen Stromversorgungsanschluss auf. Die in den Ansprüchen 1 bis 13 beschriebene Einrichtung kann eine dritte Vorrichtung im vorgenannten Sinne sein.

Eine erste Vorrichtung kann ein Mittel zur Dekodierung aufweisen, um aus einem über die Schnittstelle empfangenen Signal oder einem über die Schnittstelle empfangenen Strom zur Energieversorgung der ersten Vorrichtung die zweite Information zur Kennzeichnung des Weges zu dekodieren.

Die erste Vorrichtung kann ein Mittel zur Umsetzung der zweiten Information zur Kennzeichnung des Weges in eine erste Information zur Kennzeichnung des Weges aufweisen. Es kann aber auch sein, dass so eine Umsetzung nicht notwendig ist. Das Umsetzen kann zum Beispiel entfallen, wenn die zweite Information der ersten Information entspricht.

Der erste Empfänger kann geeignet und eingerichtet sein, ein erstes Empfangssignal zu empfangen, das eine Überlagerung des Echos des ersten Sendesignals und eines dritten Sendesignals ist, das von einer zweiten Vorrichtung gesendet wird.

Das Auswertemittel des ersten Empfängers kann geeignet und eingerichtet sein, um durch die Trennung des Empfangssignals Informationen aus dem Echo des ersten Sendesignals und Informationen aus dem dritten Sendesignal zu gewinnen.

Eine zweite Vorrichtung dient der Kennzeichnung eines Weges in einem Gebäude und der bidirektionalen Kommunikation mit einer erfindungsgemäßen ersten Vorrichtung. Zwischen der ersten Vorrichtung und der zweiten Vorrichtung können bidirektional Informationen übertragen werden, nämlich erste Informationen von der ersten Vorrichtung zur zweiten Vorrichtung und dritte Informationen von der zweiten Vorrichtung zur ersten Vorrichtung. Die erste Information ist dabei im ersten von der ersten Vorrichtung gesendeten Sendesignal enthalten und die dritte Information ist in dem dritten von der zweiten Vorrichtung gesendeten Sendesignal enthalten.

Eine zweite Vorrichtung kann ein Telefon, insbesondere ein Smartphone, ein Handheld, ein Palmtop, ein Tablet-Computer, ein Pocketcomputer, ein PDA, ein Notebook, ein Subnotebook, ein E-Book-Lesegerät, ein GPS-Gerät, ein MP3-Player, Laptop o.ä. sein.

Die zweite Vorrichtung weist einen Empfänger zum Empfang des ersten Sendesignals und einen Sender zum Senden eines dritten Sendesignals auf.

Die zweite Vorrichtung kann eine Auswerteeinheit aufweisen, um die in dem ersten Sendesignal enthaltene erste Information auszuwerten.

Der Sender der zweiten Vorrichtung kann ein Mittel zur Informationsverarbeitung und Signalerzeugung aufweisen, um das dritte Sendesignal einschließlich der darin eingebrachten dritten Information zu erzeugen.

Das Mittel zur Informationsverarbeitung und Signalerzeugung der zweiten Vorrichtung kann einen Modulator, insbesondere zur Modulation mit einem digitalen Modulationsverfahren, zum Beispiel der Amplitudenumtastung, aufweisen.

Das Mittel zur Informationsverarbeitung und Signalerzeugung der zweiten Vorrichtung kann einen Oszillator und eine Steuerung aufweisen, mit der der Oszillator gesteuert wird.

Die Modulation, insbesondere eine Amplitudenumtastung eines vom Oszillator erzeugbaren Dauerstrichradarsignals oder eines anderen Signals kann dadurch erfolgen, dass die Steuerung den Oszillator zur Erzeugung eines modulierten Signals ansteuert. Eine Amplitudenumtastung eines vom Oszillator der zweiten Vorrichtung erzeugten Signals ist auch durch Ein- und Ausschalten eines Verstärkers möglich, der das dritte Sendesignal verstärkt, bevor es von einer Sendeantenne der zweiten Vorrichtung ausgesendet wird. Ein dedizierter Modulator ist zur Modulation des dritten Sendesignals also nicht notwendig.

Die erste Vorrichtung ist ein Teil einer Not- oder Sicherheitsleuchte.

Mit der ersten Vorrichtung können neben Informationen zur Kennzeichnung eines Weges Leuchtenparameter der Not- oder Sicherheitsleuchte an die zweite Vorrichtung übertragen werden. Bei den Leuchtenparametern, die übertragen werden können, kann es sich um das Alter des Leuchtmittels, das Herstellungsdatum des Leuchtmittels, die Anzahl der Betriebsstunden des Leuchtmittels, eine maximale Temperatur des Leuchtmittels, die Anzahl der Schaltzyklen des Leuchtmittels, das Alter einer Batterie des Leuchtmittels, das Herstellungsdatum der Batterie des Leuchtmittels, die Anzahl der Betriebsstunden der Batterie, eine Temperatur der Batterie, eine maximale Temperatur der Batterie, eine minimale Temperatur der Batterie, die Anzahl der Ladezyklen der Batterie, die Bestimmung der Leuchte als Dauerlicht- oder Bereitschaftslichtleuchte, den Ort der Leuchte, und/oder einen Namen, zum Beispiel einen Personennamen umfassen. Ferner kann ein Leuchtenparameter ein Fehlercode sein, mit welchem ein Fehler bezeichnet wird, der durch die Leuchte selbst erkannt worden ist.

Bei einem Verfahren zum Detektieren von Personen und zur Kennzeichnung eines Weges in einem Gebäude kann mit einem ersten Sender ein erstes Sendesignal gesendet werden und mit einem ersten Empfänger kann ein Echo des ersten Sendesignals empfangen und ein dem Echo entsprechendes elektrisches Signal erzeugt werden. Mit einem Auswertemittel kann das dem Echo entsprechende elektrische Signal ausgewertet werden und eine Information erzeugt werden, die die Detektion von Personen anzeigt. Außerdem wird mit dem ersten Sender zum Zwecke einer Kommunikation eine erste Information, insbesondere zur Kennzeichnung des Weges und/oder des ersten Senders in das erste Sendesignal einbracht.

Bei einem Verfahren zur Kommunikation zwischen einer ersten Vorrichtung mit einem ersten Sender und einem ersten Empfänger und einer zweiten Vorrichtung mit einem Sender und einem Empfänger wird mit dem ersten Sender als erstes Sendesignal ein frequenzmoduliertes Dauerstrichradarsignal erzeugt und gesendet, welches an Objekten in der Umgebung der ersten Vorrichtung ein Echo erzeugt, das von dem ersten Empfänger empfangen wird. Dabei wird durch steigende und fallende Rampen des ersten Sendesignals ein Binärcode zur Codierung einer ersten Information erzeugt. Mit dem Empfänger der zweiten Vorrichtung wird das erste Sendesignal empfangen. Der Binärcode im ersten Sendesignal wird ausgewertet, um die erste Information zu gewinnen. Der Sender der zweiten Vorrichtung erzeugt ein Dauerstrichradarsignal, welches durch ein digitales Modulationsverfahren, insbesondere durch Amplitudenumtastung moduliert wird und so als drittes Sendesignal gesendet wird. Durch das digitale Modulationsverfahren wird ein Binärcode zur Codierung der dritten Information erzeugt. Der erste Empfänger empfängt das Echo und das dritte Sendesignal als Empfangssignal. Das Empfangssignal wird mit dem ersten Sendesignal zum Demodulieren gemischt. Anschließend werden die Informationen im Echo und im dritten Sendesignal getrennt. Das ist möglich, da die Informationen in verschiedenen Frequenzbereichen übertragen und nach dem Mischen in verschiedenen Zwischenfrequenzbereichen sichtbar werden.

Ein Ausführungsbeispiel für die Erfindung ist anhand der Zeichnungen näher beschrieben. Darin zeigt:
- Fig. 1: ein vereinfachtes Blockschaltbild einer Anordnung aus einer ersten Vorrichtung und einer zweiten Vorrichtung,
- Fig. 2: Frequenzverläufe, wie sie unter verschiedenen Randbedingungen auftreten können,
- Fig. 3: Zeitverläufe, wie sie beispielhaft bei einem Kommunikationsverfahren auftreten können, das mit der Anordnung nach Fig. 1 durchgeführt wird und
- Fig. 4: eine schematische Darstellung einer Anordnung aus zwei ersten Vorrichtungen, einer zweiten Vorrichtung, einer dritten Vorrichtung, nämlich einer Einrichtung zur Notlichtversorgung

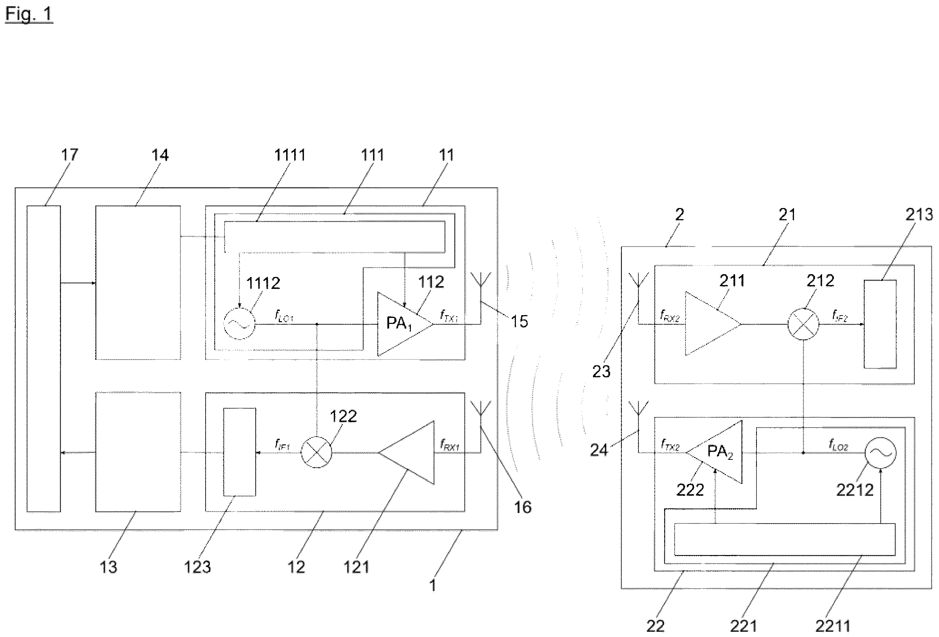

Die in der Fig. 1 dargestellte erfindungsgemäße erste Vorrichtung 1 weist einen ersten Sender 11 und einen ersten Empfänger 12, einen zweiten Sender 13 und einen zweiten Empfänger 14 auf. Außerdem ist eine Sendeantenne 15, eine Empfangsantenne 16 und eine Schnittstelle 17 vorgesehen.

Über die Schnittstelle 17 kann die erste Vorrichtung 1 mit einem Stromnetz verbunden werden. Über das Stromnetz kann die erste Vorrichtung 1 zum Einen mit elektrischer Energie versorgt werden und zum Anderen können über das Stromnetz Informationen übermittelt werden.

Über die Sendeantenne 15 kann ein erstes Sendesignal gesendet werden, das von der Umgebung der ersten Vorrichtung 1 reflektiert wird. Das Echo auf dieses erste Sendesignals wird als Empfangssignal oder als Teil eines Empfangssignals über die Empfangsantenne 16 empfangen. Von der Empfangsantenne 16 wird das Empfangssignal zu dem ersten Empfänger 12 geleitet. Dieser erzeugt aus dem Empfangssignal eine Information, die an den zweiten Sender 13 geleitet wird, der ein zweites Sendesignal erzeugt, in dem die Information enthalten ist. Das zweite Sendesignal wird über die Schnittstelle 17 an das Stromnetz übergeben.

Der zweite Empfänger 14 nimmt ein über die Schnittstelle 17 an die erste Vorrichtung 1 geleitetes Signal auf, in dem Informationen enthalten sind, die in dem zweiten Empfänger 141 dekodiert und in eine erste Information umgesetzt werden, die von dem ersten Sender in das erste Sendesignal eingebracht wird.

Der erste Sender 11 weist zur Erzeugung des ersten Sendesignals ein Mittel 111 zur Informationsverarbeitung und Signalerzeugung auf. Dieses kann eine Steuerung 1111 aufweisen, die einen Oszillator 1112 steuert. Die Steuerung 1111 steuert in Abhängigkeit von den ersten Informationen den Oszillator 1112. So kann mit dem Oszillator das erste Sendesignal erzeugt werden. Bei dem ersten Sendesignal handelt es sich um ein frequenzmoduliertes Dauerstrichradarsignal mit steigenden oder fallenden Rampen, wobei durch die fallenden oder steigenden Rampen ein Binärcode erzeugt wird, in dem die erste Information kodiert ist. Das erste Sendesignal wird vom Verstärker 112 des ersten Senders 11 verstärkt, um dann über die Sendeantenne 15 gesendet zu werden. Das erste Sendesignal kann in einem Frequenzband von 24,05 GHz bis 24,25 GHz liegen.

Das über die Empfangsantenne 16 als Teil des Empfangssignals empfangene Echo des ersten Sendesignals wird im ersten Empfänger 12 von einem Verstärker 121 verstärkt und anschließend in einem Demodulator 122, einem Mischer, mit dem ersten Sendesignal gemischt. Die dadurch erzeugten Differenzfrequenzen werden dann im Auswertemittel 123 ausgewertet. Dabei können verschiedene Frequenzbereiche betrachtet werden, um verschiedene Informationen zu gewinnen.

So kann ein erster Frequenzbereich mit sehr kleinen Frequenzen betrachtet werden. In diesem ersten Frequenzbereich von ca. 2 Hz bis 5 kHz finden sich Frequenzdifferenzen, die aufgrund der Laufzeit des ersten Sendesignals von der ersten Sendeantenne 15 zu einem reflektierenden Objekt und des Echos von dort zur ersten Empfangsantenne oder aufgrund einer Bewegung des reflektierenden Objekts (Dopplerfrequenz) entstehen. In diesem ersten Frequenzbereich können Informationen über das Objekt oder die Objekte gewonnen werden, an denen das erste Sendesignal reflektiert und das Echo erzeugt wird.

Diese Informationen werden von dem Auswertemittel 123 dem zweiten Sender 13 zugeleitet, der ein Mittel zur Informationsverarbeitung und Signalerzeugung aufweist. Dieses erzeugt ein zweites Sendesignal, das dann über die Schnittstelle 17 in das Stromnetz übertragen wird.

Mit dem Auswertemittel 123 kann auch ein weiterer Frequenzbereich betrachtet und ausgewertet werden. In diesem Frequenzbereich der Zwischenfrequenz können Informationen, die von der zweiten Vorrichtung 2 zur ersten erfindungsgemäßen Vorrichtung 1 übertragen werden, erkannt werden.

Die zweite Vorrichtung 2 weist einen Empfänger 21, einen Sender 22, eine Empfangsantenne 23 und eine Sendeantenne 24 auf.

Über die Empfangsantenne 23 kann die zweite Vorrichtung 2 das erste Sendesignal der ersten Vorrichtung 1 empfangen. Das empfangene erste Sendesignal wird von der Antenne 23 zu einem Empfänger 21 mit einem Verstärker 211 geleitet, in dem das empfangene erste Sendesignal vor einer weiteren Verarbeitung verstärkt wird. Nach dem Verstärken wird das Signal mit einem von dem Sender 22 der zweiten Vorrichtung 2 erzeugten Lokalsignal gemischt, wozu der Empfänger 21 einen Demodulator 212 aufweist.

Das Lokalsignal kann ein unmoduliertes Dauerstrichradarsignal sein, mit einer Frequenz, die ungefähr in der Bandmitte des Frequenzbandes liegt, in dem die erste Vorrichtung das erste Sendesignal sendet. Durch den Demodulator 212 wird ein gemischtes Signal in einem Zwischenfrequenzbereich erzeugt, das in einer Auswerteeinheit 213 ausgewertet wird. Die Auswerteeinheit 213 erkennt die fallenden und steigenden Rampen des ersten Sendesignals, die sich im gemischten Signal wiederfinden. Die durch die steigenden und fallenden Rampen binärcodierte erste Information wird in der Auswerteeinheit 213 reproduziert und kann durch ein Darstellungsmittel (nicht dargestellt) sichtbar, hörbar und/oder fühlbar gemacht werden. Damit ist eine unidirektionale Kommunikation zwischen der ersten Vorrichtung 1 und der zweiten Vorrichtung beschrieben.

Der Oszillator 2212, mit dem das Lokalsignal erzeugt wird, mit dem das erste Sendesignal im Empfänger 21 der zweiten Vorrichtung 2 gemischt wird, ist Teil eines Mittels zur Informationsverarbeitung und Signalerzeugung 221 des Senders 22 der zweiten Vorrichtung 2. Der Oszillator 2212 wird von einer Steuerung 2211 des Mittels 221 gesteuert. Die Steuerung steuert auch einen Verstärker 222 des Senders 22, mit dem das Lokalsignal verstärkt und auch moduliert wird. Die Modulation ist eine Amplitudenumtastung. Dazu wird der Verstärker ein- und ausgeschaltet. Durch dieses Ein- und Ausschalten kann ein Binärcode in das Signal am Ausgang des Verstärkers 222 eingebracht werden. Mittels des Binärcodes kann eine dritte Information in dem Signal codiert werden, dass über die zweite Sendeantenne 24 als drittes Sendesignal gesendet wird.

Das von der zweiten Sendeantenne 24 gesendete dritte Sendesignal wird von der ersten Empfangsantenne 16 der ersten Vorrichtung 1 zusammen mit dem Echo auf das erste Sendesignal als Empfangssignal empfangen und in dem Empfänger 12 der ersten Vorrichtung 1 auf die bereits beschriebene Art verarbeitet. In dem Auswertemittel 123 der ersten Vorrichtung 1 wird das von dem Demodulator 122 gelieferte Signal im Zwischenfrequenzbereich auch dahingehend ausgewertet, ob ein drittes Sendesignal von der zweiten Vorrichtung gesendet worden ist. Das dritte Sendesignal wird im Zwischenfrequenzsignal in einem anderen Frequenzbereich sichtbar als die Echos auf das erste Sendesignal, weshalb zwischen den Echos und dem dritten Sendesignal differenziert werden kann.

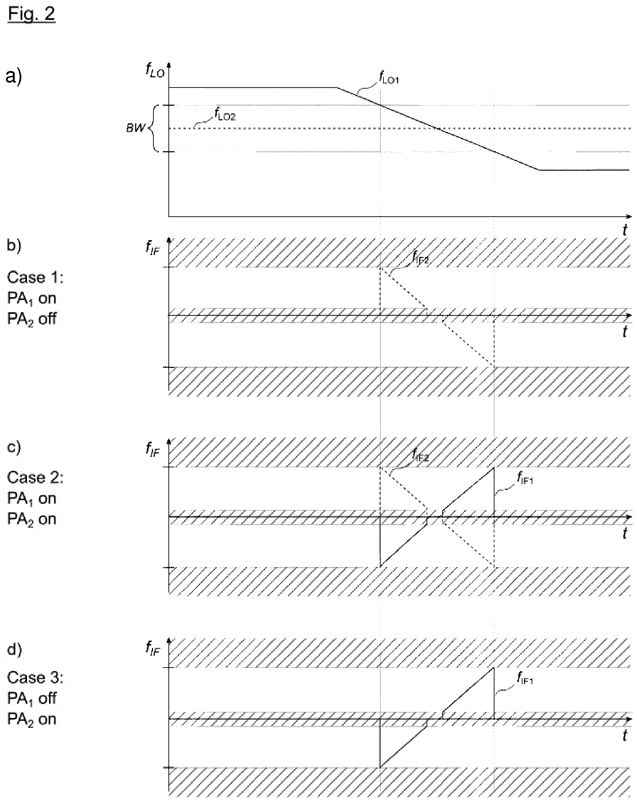

In der Fig. 2 sind Beispiele für die Frequenzverläufe des ersten Sendesignals f_{LO1}, des dritten Sendesignals f_{LO2}, des Zwischenfrequenzsignals f_{IF1} im ersten Empfänger 12 der ersten Vorrichtung 1 und des Zwischenfrequenzsignals f_{IF2} im Empfänger 21 der zweiten Vorrichtung dargestellt. Die Zwischenfrequenzen f_{IF1}, f_{IF2} sind definiert als Differenz zwischen den Frequenzen der über die Antennen 16, 23 empfangenen Signale f_{RX1}, f_{RX2} und den Lokalsignalen f_{LO1}, f_{LO2}, die von den Oszillatoren 1112 und 2212 erzeugt werden (f_{IF1}= f_{RX1}-f_{LO1}, f_{IF2}= f_{RX2}-f_{LO2}).

Dargestellt ist in Fig. 2a eine fallende Rampe im Frequenzverlauf f_{LO1} des vom Oszillator 1112 der ersten Vorrichtung erzeugten frequenzmodulierten Dauerstrichsignals, das als erstes Sendesignal von der ersten Vorrichtung 1 gesendet wird. Dargestellt ist in Fig. 2a ebenfalls der Frequenzverlauf f_{LO2} des vom Oszillator 2212 der zweiten Vorrichtung 2 erzeugten Dauerstrichsignals, dass durch das Ein- und Ausschalten moduliert wird und dann als amplitudenumgetastetes Dauerstrichsignal von der zweiten Vorrichtung 2 als drittes Sendesignal gesendet wird.

In der Figur 2a ist mit BW das Frequenzband bezeichnet, welches nach der Demodulation durch die Demodulatoren 122, 212 für den Zweck der Kommunikation betrachtet wird.

In den Figuren 2b bis 2d werden dann drei verschiedene Fälle betrachtet, in denen sich nach der Demodulation mit den Demodulatoren 122, 212 und einer Filterung in den Auswerteeinheiten 123, 213 jeweils unterschiedliche Frequenzverläufe der Zwischenfrequenzsignale ergeben. In den Figuren 2b bis 2d sind lediglich die Frequenzen der Zwischenfrequenzsignale dargestellt, die nach der Filterung berücksichtigt werden. Die durch die Filterung ausgeblendeten Frequenzbereiche sind in den Figuren 2b bis 2d schraffiert dargestellt. Darin sind hohe und sehr niedrige Frequenzen ausgefiltert.

Im ersten Fall (Fig. 2b) wird davon ausgegangen, dass zwar der erste Sender 11 der ersten Vorrichtung das erste Sendesignal aussendet, der Sender 22 der zweiten Vorrichtung 2 aber kein drittes Sendesignal sendet oder die Amplitude des dritten Sendesignals aufgrund der Amplitudenumtastung bzw. der Modulation des dritten Sendesignals auf null reduziert ist. Durch die Mischung des ersten Sendesignals mit dem Signal des Oszillators des Senders 22 im Empfänger 21 ergibt sich eine fallende Rampe über den nach der Filterung in der Auswerteeinheit 213 der zweiten Vorrichtung 2 betrachteten Frequenzbereich. Da der Sender 22 der zweiten Vorrichtung 2 kein Signal sendet und so vom ersten Empfänger 12 der ersten Vorrichtung in dem interessierenden Frequenzbereich kein Signal empfangen wird, ist in dem vom Demodulator 122 gemischten und in der Auswerteeinheit 123 der ersten Vorrichtung 1 gefilterten und ausgewerteten Signal keine Amplitude erkennbar.

Im zweiten Fall (Fig. 2c) wird wiederum davon ausgegangen, dass der erste Sender 11 der ersten Vorrichtung 1 das erste Sendesignal aussendet. Auch der Sender 22 der zweiten Vorrichtung 2 sendet nun das dritte Sendesignal aus bzw. die Amplitude des dritten Sendesignals ist aufgrund der Amplitudenumtastung bzw. der Modulation des dritten Sendesignals sichtbar. Durch die Mischung des ersten Sendesignals mit dem Signal des Oszillators 2212 des Senders 22 im Empfänger 21 ergibt sich wieder eine fallende Rampe über den nach der Filterung in der Auswerteeinheit 213 betrachteten Frequenzbereich. Da der Sender 22 der zweiten Vorrichtung 2 in dem betrachteten Zeitabschnitt ein Dauerstrichsignal sendet, das vom ersten Empfänger 12 der ersten Vorrichtung 1 empfangen wird, ist in dem vom Demodulator 122 gemischten und in der Auswerteeinheit 123 gefilterten und ausgewerteten Signal ein Signal erkennbar, dessen Verlauf durch das Signal des Oszillators 1112 im ersten Sender 11 geformt wird. Es ergibt sich in dem interessierenden Frequenzbereich eine steigende Rampe.

Im dritten Fall (Fig. 2d) ist dagegen der Verstärker 112 des ersten Senders 11 der ersten Vorrichtung 1 ausgeschaltet, so dass das erste Sendesignal nicht gesendet wird. Der Empfänger 21 der zweiten Vorrichtung 2 empfängt daher kein Signal vom ersten Sender 11. Nach der Mischung im Demodulator 212 und einer Filterung im Auswertemittel 213 ist daher keine Amplitude sichtbar. Dagegen sendet der Sender 22 der zweiten Vorrichtung 2 das dritte Sendesignal bzw. die Amplitude des dritten Sendesignals ist aufgrund der Amplitudenumtastung bzw. der Modulation des dritten Sendesignals wie auch schon im zweiten Fall sichtbar. Der Sender 22 der zweiten Vorrichtung 2 sendet in dem betrachteten Zeitabschnitt ein Dauerstrichsignal, das vom ersten Empfänger 12 der ersten Vorrichtung 1 empfangen wird. Das empfangene Signal wird in dem Demodulator 122 gemischt und in der Auswerteeinheit 123 gefiltert und ausgewertet. Das gefilterte Signal hat einen Verlauf, der durch das Signal des Oszillators 1112 im ersten Sender 11 geformt wird. Es ergibt sich in dem interessierenden Frequenzbereich wie schon im zweiten Fall eine steigende Rampe.

Aus dieser Betrachtung kann man Erkenntnis gewinnen oder folgern:
Eine fallende Rampe im ersten Sendesignal wird als fallende Rampe des Zwischenfrequenzsignals für die Auswerteeinheit 213 der zweiten Vorrichtung sichtbar. Für den Fall, dass im ersten Sendesignal eine steigende Rampe vorliegt, lässt sich folgern, dass die Auswerteeinheit 213 eine steigende Rampe erkennen kann. Damit lassen sich zwei binäre Zustände von der ersten Vorrichtung 1 zur zweiten Vorrichtung 2 übertragen. Damit ist ein Kommunikationskanal von der ersten zur zweiten Vorrichtung beschrieben.

Überträgt der Sender 22 der zweiten Vorrichtung 2 ein Dauerstrichsignal und erzeugt der Oszillator 1112 des ersten Senders 11 der ersten Vorrichtung 1 eine fallende Rampe, wird diese in der Auswerteeinheit 123 als eine steigende Rampe sichtbar. Es lässt sich folgern, dass in dem Fall, in dem der Oszillator 1112 des ersten Senders 11 ein Signal mit steigender Rampe erzeugt und dieses mit dem von dem Sender 22 der zweiten Vorrichtung 2 gemischt wird, für die Auswerteinheit 123 der ersten Vorrichtung 1 eine fallende Rampe sichtbar wird. Wenn also der Sender 22 ein Dauerstrichsignal sendet, kann die Auswerteeinheit 123 eine fallende oder eine steigende Rampe erkennen.

Sendet der Sender 22 der zweiten Vorrichtung 2 kein Dauerstrichsignal, ist für die Auswerteeinheit 123 in dem gefilterten Signal keine Amplitude sichtbar, unabhängig davon, ob im ersten Sendesignal eine fallende oder steigende Rampe gesendet wird. Durch das Senden oder Nichtsenden eines Dauerstrichsignals durch den Sender 22 der zweiten Vorrichtung 2 können somit in der Auswerteeinheit 123 der ersten Vorrichtung 1 zwei Zustände unterschieden werden: Liegt eine steigende oder fallende Rampe vor, kennzeichnet dies den einen Zustand, liegt dagegen keine Rampe vor, kennzeichnet dies den anderen Zustand. Durch das Senden oder Nichtsenden eines Dauerstrichsignals lassen sich damit zwei binäre Zustände von der zweiten Vorrichtung 2 zur ersten Vorrichtung 1 übertragen. Damit ist ein Kommunikationskanal der zweiten Vorrichtung 2 zur ersten Vorrichtung 1 beschrieben.

Da zwei Kommunikationskanäle unterschiedlicher Richtungen möglich sind, ist eine binärcodierte Kommunikation im Vollduplex zwischen der ersten Vorrichtung 1 und der zweiten Vorrichtung 2 möglich.

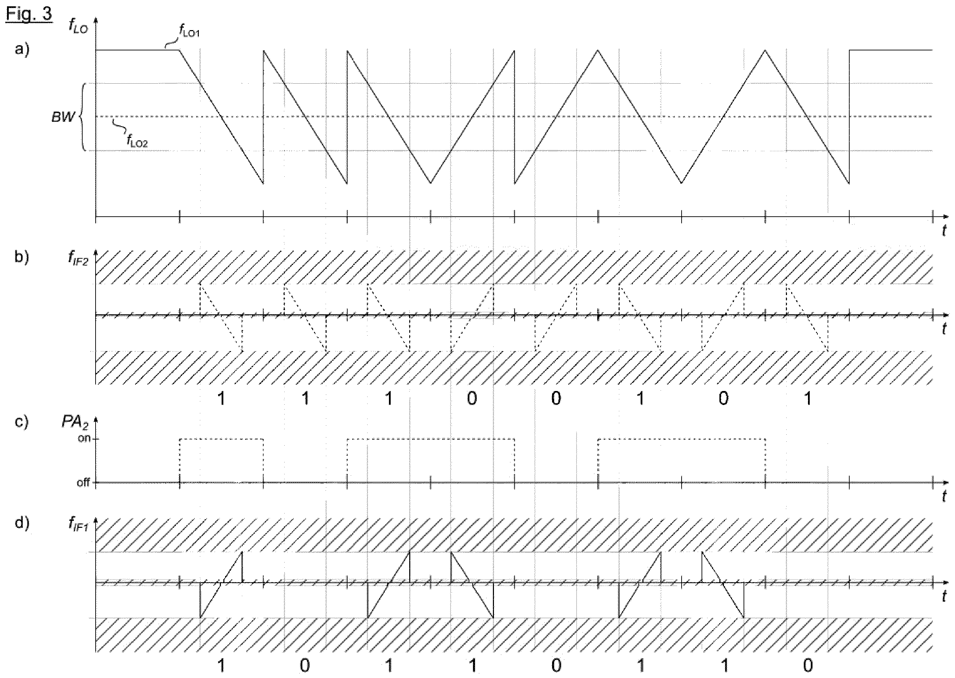

Ein Beispiel für eine binärcodierte Kommunikation im Vollduplex ist in der Fig. 3 dargestellt. Diese zeigt in Fig. 3a den Verlauf der Frequenz des vom Oszillator 1112 der ersten Vorrichtung erzeugten Signals, das dem unverstärkten ersten Sendesignal des Senders 11 entspricht. Es ist ein frequenzmoduliertes Dauerstrichradarsignal mit steigenden und fallenden Rampen. Die fallenden Rampen stehen dabei für eine Eins und die steigenden Rampen stehen für eine Null. Durch die Folge von steigenden und fallenden Rampen, also der Folge von Nullen und Einsen wird die erste Information, die von der ersten Vorrichtung zur zweiten Vorrichtung übertragen wird, binärcodiert.

Dieses frequenzmodulierte Dauerstrichradarsignal mit steigenden und fallenden Rampen wird im Empfänger 21 mit dem Dauerstrichsignal des Oszillators 2212 gemischt und dann gefiltert. Das gefilterte Signal ist in Fig. 3b dargestellt. Es wird ausgewertet, wodurch die Nullen und Einsen der ersten Information dadurch wieder sichtbar werden. Sie sind in der Fig. 3b wiedergegeben.

Die Binärcodierung der dritten Information in dem von der zweiten Vorrichtung 2 zur ersten Vorrichtung 1 übertragenen dritten Sendesignal erfolgt durch das Ein- und Ausschalten des Verstärkers 222 des Senders 22 der zweiten Vorrichtung 2. Durch das Ein- und Ausschalten erfährt das vom Oszillator 2212 erzeugte Dauerstrichsignal eine Amplitudenumtastung. Die Folge der Zustände des Verstärkers 222 des Senders 22 ist in der Fig. 3c dargestellt. Im gefilterten Zwischenfrequenzsignal im ersten Empfänger 12 werden in den während der Einzustände des Verstärkers 222 fallende oder steigende Rampen sichtbar, was einer logischen Eins entspricht. Ist der Verstärker 222 dagegen ausgeschaltet, ist nichts sichtbar, was einer logischen Null entspricht. Der Frequenzverlauf ist in der Fig. 3d dargestellt. Die Nullen und Einsen der übertragenen dritten Information sind ebenfalls in der Fig. 3d dargestellt.

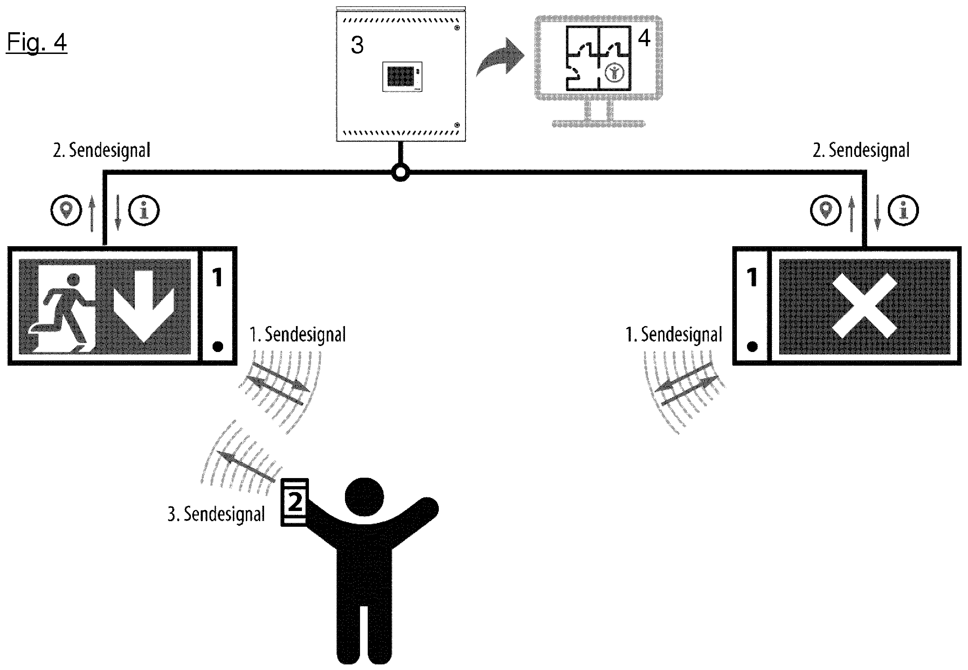

Die in der Fig. 4 dargestellte Anordnung weist zwei erste Vorrichtungen 1, eine zweite Vorrichtung 2 und als dritte Vorrichtung eine Einrichtung zur Notlichtversorgung auf, die zwei erste Vorrichtungen, nämlich Rettungszeichenleuchten 1 mit elektrischer Energie versorgt. Die beiden Rettungszeichenleuchten 1 sind Leuchten, mit denen eine dynamische Anzeige des Rettungsweges möglich ist, d.h. der Rettungsweg kann im Notfall dynamisch angepasst werden, um zum Beispiel Rettungswege zu ändern, falls ein vorbestimmter Rettungsweg in einen Gefahrenbereich führen sollte.

Die zweite Vorrichtung 2 ist ein mobiles Handgerät, das von einer Person mitgeführt wird.

Die beiden Rettungszeichenleuchten 1 sind an verschiedenen Orten in einem Gebäude angebracht und senden erste Sendesignale in ihre Umgebungen. Das erste Sendesignal wird von der Person, die das Handgerät 2 trägt reflektiert. Das Echo wird von der linken Rettungszeichenleuchte 1 empfangen und verarbeitet. Sie erkennt die Anwesenheit der Person und meldet das mittels des zweiten Sendesignals an die Einrichtung 3 zur Notlichtversorgung. An diese ist ein Bildschirm 4 angeschlossen, auf dem der Aufenthaltsort der Person grafisch dargestellt wird.

Zusätzlich wird das von der in der Fig. 4 links dargestellten Rettungszeichenleuchte 1 gesendete erste Sendesignal von dem Handgerät 2 empfangen. Das erste Sendesignal wird in dem Handgerät 2 verarbeitet und das Handgerät 2 erzeugt eine drittes Sendesignal, welches von dem Handgerät 2 gesendet und von der linken Rettungszeichenleuchte 1 empfangen wird. Durch das Empfangen des ersten Sendesignals durch das Handgerät 2 und das Empfangen des dritten Sendesignals durch die linke Rettungszeichenleuchte 1 werden Informationen ausgetauscht, wie zuvor schon anhand der Figuren 1 bis 3 beschrieben worden ist.

### Bezugszeichen:

- 1: erste Vorrichtung

- 11: erster Sender
- 111: erstes Mittel zur Informationsverarbeitung und Signalerzeugung
- 1111: Steuerung
- 1112: Oszillator
- 112: Verstärker

- 12: erster Empfänger
- 121: Verstärker
- 122: Demodulator
- 123: Auswertemittel

- 13: zweiter Sender

- 14: zweiter Empfänger

- 15: Sendeantenne

- 16: Empfangsantenne

- 17: Schnittstelle

- 2: zweite Vorrichtung

- 21: Empfänger
- 211: Verstärker
- 212: Demodulator
- 213: Auswerteeinheit

- 22: Sender
- 221: Mittel zur Informationsverarbeitung und Signalerzeugung
- 2212: Oszillator
- 2211: Steuereinheit
- 222: Verstärker

- 23: Empfangsantenne
- 24: Sendeantenne

- 3: dritte Vorrichtung

- 4: Bildschirm

## Patentansprüche

1. Notleuchte, insbesondere Sicherheitsleuchte für Rettungswege oder Sicherheitsleuchte für dynamische Sicherheitsleitsysteme, **dadurch gekennzeichnet, dass** die Notleuchte eine erste Vorrichtung (1) zum Detektieren von Personen und Übertragung von ersten Informationen aufweist,
- wobei die erste Vorrichtung (1) einen ersten Sender (11) zum Senden eines ersten Sendesignals aufweist und
- wobei der erste Sender (11) geeignet und eingerichtet ist, in das erste Sendesignal zum Zwecke einer Kommunikation eine erste Information einzubringen, wobei die erste Information eine Information zur Kennzeichnung eines Flucht- oder Rettungsweges umfasst,
- wobei der erste Sender (11) ein FMCW-Radarsender und das erste Sendesignal ein frequenzmoduliertes Dauerstrichsignal ist,
- wobei der erste Sender (11) ein erstes Mittel (111) zur Informationsverarbeitung und Signalerzeugung aufweist, um das erste Sendesignal einschließlich der darin eingebrachten ersten Information zur Kennzeichnung des Weges zu erzeugen und
- wobei die erste Vorrichtung (1) ein zweites Mittel (13) zur Informationsverarbeitung und Signalerzeugung aufweist, um ein zweites Sendesignal zu erzeugen, welches die Personen anzeigende Information enthält,
- wobei die erste Vorrichtung (1) eine Schnittstelle (17) aufweist, über welche das zweite Sendesignal aus der ersten Vorrichtung (1) heraus übertragbar ist,
- wobei das erste Sendesignal zur Erzeugung eines Echos gesendet wird, um anhand des Echos Personen zu detektieren,
- wobei die erste Vorrichtung einen ersten Empfänger (12) zum Empfangen des Echos des ersten Sendesignals und zur Erzeugung eines dem Echo entsprechenden elektrischen Signals aus dem empfangenen Echo aufweist und
- wobei der erste Empfänger (12) ein Auswertemittel (123) aufweist, um das dem Echo entsprechende elektrische Signal auszuwerten,
- wobei das Auswertemittel (123) geeignet und eingerichtet ist, eine Information zu erzeugen, die die Detektion von Personen anzeigt,
- wobei über die Schnittstelle (17) eine zweite Information zur Kennzeichnung eines Weges in die erste Vorrichtung hinein übertragbar ist.

2. Notleuchte nach Anspruch 1, **dadurch gekennzeichnet, dass** der erste Empfänger (12) einen ersten Demodulator (122) aufweist.

3. Notleuchte nach Anspruch 1 oder 2, **dadurch gekennzeichnet, dass** der erste Empfänger (12) geeignet und eingerichtet ist ein erste Empfangssignal zu empfangen, das eine Überlagerung des Echos des ersten Sendesignals und eines dritten Sendesignals ist.

4. Notleuchte nach Anspruch 2 und nach Anspruch 3, **dadurch gekennzeichnet, dass** der erste Demodulator (122) des ersten Empfängers (12) geeignet und eingerichtet ist, das erste Empfangssignal zu Demodulieren.

5. Notleuchte nach Anspruch 3 oder 4, **dadurch gekennzeichnet, dass** das Auswertemittel (123) des ersten Empfängers (12) geeignet und eingerichtet ist, Informationen im Echo des ersten Sendesignals und im dritten Sendesignal zu trennen.

6. Sicherheitsleuchte für Rettungswege oder für dynamische Sicherheitsleitsysteme nach einem der Ansprüche 1 bis 5, **dadurch gekennzeichnet, dass** die Sicherheitsleuchte ein richtungsweisendes Mittel mit mindestens einem Leuchtmittel und ein Mittel zur Steuerung des Leuchtmittels aufweist, wobei mit dem Mittel zur Steuerung des Leuchtmittels des richtungsweisenden Mittels in Abhängigkeit der ersten oder zweiten Information zur Kennzeichnung des Weges das Leuchtmittel steuerbar ist.

7. Verfahren zum Detektieren von Personen und zur Kennzeichnung eines Weges in einem Gebäude mit einer Notleuchte nach einem der Ansprüche 1 bis 5, wobei mit einem ersten Sender (11) ein erstes Sendesignal gesendet wird und mit einem ersten Empfänger (12) ein Echo des ersten Sendesignals empfangen und ein dem Echo entsprechendes elektrisches Signal erzeugt wird und wobei mit einem Auswertemittel (123) das dem Echo entsprechende elektrische Signal ausgewertet wird und eine Information erzeugt wird, die die Detektion von Personen anzeigt,
wobei der erste Sender (11) zum Zwecke einer Kommunikation eine erste Information zur Kennzeichnung des Weges in das erste Sendesignal einbringt
und wobei mit einem zweiten Mittel (13) zur Informationsverarbeitung und Signalerzeugung ein zweites Sendesignal erzeugt wird, welches die Personen anzeigende Information enthält.

## Claims

1. Emergency lamp, in particular safety lamp for rescue routes or safety lamps for dynamic safety guiding systems, **characterised in that** the emergency lamp has a first device (1) for detecting persons and transmission of first items of information,
- wherein the first device (1) has a first transmitter (11) for transmitting a first transmit signal and
- wherein the first transmitter (11) is suitable and configured to introduce a first item of information into the first transmit signal for the purpose of a communication, wherein the first item of information comprises an item of information for characterising an escape or rescue path,
- wherein the first transmitter (11) is a FMCW radar transmitter and the first transmit signal is frequency-modulated continuous wave radar signal,
- wherein the first transmitter (11) has a first means (111) for the processing of information and the generation of signals, in order to generate the first transmit signal including the first item of information, introduced therein, for characterising the path
- wherein the first device (1) has a second means (13) for the processing of information and the generation of signals, in order to generate a second transmit signal which contains the information displaying the persons
- wherein the first device (1) has an interface (17) via which the second transmit signal is transferable out of the first device (1),
- wherein the first transmit signal is transmitted to generate an echo in order to detect persons on the basis of the echo,
- wherein the first device has a first receiver (12) for receiving an echo of the first transmit signal and for generating from the received echo an electrical signal corresponding to the echo and
- wherein the first receiver (12) has an evaluation means (123) in order to evaluate the electrical signal corresponding to the echo,
- wherein the evaluation means (123) is suitable and configured to generate an item of information which display the detection of persons,
- wherein a second piece of information for identifying a path into the first device can be transmitted via the interface (17).

2. Emergency lamp according to claim 1, **characterised in that** the first receiver (12) has a first demodulator (122).

3. Emergency lamp according to claim 1 or 2, **characterised in that** the first receiver (12) is suitable and configured to receive a first receive signal which is a superimposition of the echo of the first transmit signal and a third transmit signal.

4. Emergency lamp according to claim 2 and according to claim 3, **characterised in that** the first demodulator (122) of the first receiver (12) is suitable and configured to demodulate the first receive signal.

5. Emergency lamp according to claim 3 or 4, **characterised in that** the evaluation means (123) of the first receiver (12) is suitable and configured to separate items of information in the echo of the first transmit signal and in the third transmit signal.

6. Safety lamp for rescue routes or for dynamic safety guiding systems according to one of the claims 1 to 5, **characterised in that** the safety lamp has a direction-indicating means having at least one illuminant and a means for controlling the illuminant, wherein the illuminant is controllable with the means for controlling the illuminant of the direction-indicating means as a function of the first or second item of information for characterising the path.

7. Method for detecting persons and for characterising a path in a building, with a emergency lamp according to one of the claims 1 to 5, wherein with a first transmitter (11) a first transmit signal is transmitted and with a first receiver (12) an echo of the first transmit signal is received and an electrical signal corresponding to the echo is generated and wherein with an evaluation means (123) the electrical signal corresponding to the echo is evaluated and an item of information is generated which displays the detection of persons,
wherein for the purpose of a communication, the first transmitter (11) introduces into the first transmit signal a first item of information for characterising the path
and wherein with a second means (13) for information processing and signal generation a second transmit signal is generated which contains information displaying the persons.

## Revendications

1. Luminaire de secours, en particulier luminaire de sécurité pour voies de secours ou luminaire de sécurité pour systèmes de guidage de sécurité dynamiques, **caractérisé en ce que** le luminaire de secours présente un premier dispositif (1) pour détecter des personnes et transmettre des premières informations,
- dans lequel le premier dispositif (1) présente un premier émetteur (11) pour émettre un premier signal d'émission et
- dans lequel le premier émetteur (11) est adapté et conçu pour introduire une première information dans le premier signal d'émission en vue d'une communication, dans lequel la première information comprend une information pour caractériser un trajet d'évacuation ou de sauvetage,
- dans lequel le premier émetteur (11) est un émetteur radar FMCW et le premier signal d'émission est un signal radar à onde continue modulée en fréquence
- dans lequel le premier émetteur (11) présente un premier moyen (111) de traitement d'informations et de génération de signaux pour générer le premier signal d'émission comprenant les premières informations incorporées dans celui-ci pour caractériser le trajet,
- dans lequel le premier dispositif (1) présente un second moyen (13) de traitement d'informations et de génération de signaux pour générer un deuxième signal d'émission qui contient les informations indiquant les personnes,
- dans lequel le premier dispositif (1) présente une interface (17) par laquelle le deuxième signal d'émission peut être transmis hors du premier dispositif (1),
- dans lequel le premier signal d'émission est transmis pour générer un écho afin de détecter des personnes sur la base de l'écho,
- dans lequel un premier récepteur (12) pour recevoir un écho du premier signal d'émission et pour générer un signal électrique correspondant à l'écho à partir de l'écho reçu, et
- dans lequel le premier récepteur (12) présente un moyen d'évaluation (123) pour évaluer le signal électrique correspondant à l'écho,
- dans lequel le moyen d'évaluation (123) est adapté et conçu pour générer une information indiquant la détection de personnes,
- dans lequel une deuxième information permettant d'identifier un trajet vers le premier dispositif peut être transmise via l'interface (17).

2. Luminaire de secours selon la revendication 1, **caractérisé en ce que** le premier récepteur (12) présente un premier démodulateur (122).

3. Luminaire de secours selon la revendication 1 ou 2, **caractérisé en ce que** le premier récepteur (12) est adapté et conçu pour recevoir un premier signal de réception qui est une superposition de l'écho du premier signal d'émission et d'un troisième signal d'émission.

4. Luminaire de secours selon la revendication 2 et selon la revendication 3, **caractérisé en ce que** le premier démodulateur (122) du premier récepteur (12) est adapté et conçu pour démoduler le premier signal de réception.

5. Luminaire de secours selon la revendication 3 ou 4, **caractérisé en ce que** le moyen d'évaluation (123) du premier récepteur (12) est adapté et conçu pour séparer des informations dans l'écho du premier signal d'émission et dans le troisième signal d'émission.

6. luminaire de sécurité pour voies de secours ou pour systèmes de guidage de sécurité dynamiques selon un des revendications 1 à 5, **caractérisé en ce que** le luminaire de sécurité présente un moyen d'indication de direction avec au moins un moyen d'éclairage et un moyen de commande du moyen d'éclairage, dans lequel le moyen de commande du moyen d'éclairage du moyen d'indication de direction permet de commander le moyen d'éclairage en fonction de la première ou de la seconde information pour caractériser le trajet.

7. Procédé de détection de personnes et de caractérisation d'un trajet dans un bâtiment, avec une luminaire de secours selon un des revendication1 à 5, dans lequel un premier signal d'émission est émis avec un premier émetteur (11) et un écho du premier signal d'émission est reçu avec un premier récepteur (12) et un signal électrique correspondant à l'écho est généré, et dans lequel le signal électrique correspondant à l'écho est évalué à l'aide d'un moyen d'évaluation (123) et une information est générée, laquelle indique la détection de personnes,
dans lequel le premier émetteur (11) introduit, dans le but d'une communication, une première information pour caractériser le trajet dans le premier signal d'émission
et dans lequel un second moyen (13) de traitement d'informations et de génération de signaux permet de générer un deuxième signal d'émission qui contient des informations indiquant les personnes.
